# EUROPÄISCHE PATENTSCHRIFT

(11) **EP 2 025 631 B1**
(45) Veröffentlichungstag und Bekanntmachung des Hinweises auf die Patenterteilung: **16.03.2011**
(21) Anmeldenummer: 08014042.9
(22) Anmeldetag: 06.08.2008
(51) Int. Cl.: B65G 65/00

(54) **Stapelzelle**
Stacking de-stacking cell
Cabine d'empilage dépilage

(30) Priorität: 16.08.2007 DE 102007038622
(43) Veröffentlichungstag der Anmeldung: 18.02.2009
(73) Patentinhaber: ads-tec GmbH, 70771 Leinfelden-Echterdingen (DE)
(72) Erfinder: Frank, Jens, 71686 Remseck (DE); Greif, Andreas, 73235 Weilheim (DE); von Bonin, Volkart, 70619 Stuttgart (DE)
(74) Vertreter: Gleiss, Alf-Olav

(56) Entgegenhaltungen:
- DE-A1- 3 437 127
- FR-A- 2 548 636
- JP-A- 59 022 821
- US-A- 5 498 122
- US-A- 5 868 545
- US-A1- 2004 240 980

## Beschreibung

Die Erfindung betrifft eine Stapelzelle gemäß Oberbegriff des Anspruchs 1. Die Erfindung betrifft auch ein Verfahren zum Bereitstellen von auf Aufnahme einheiten aufgebrachten Werkstücken, gemäß Oberbegriff des Anspruchs 13.

Stapelzellen der hier angesprochenen Art sind bekannt. Sie dienen insbesondere dazu, auf Paletten als Aufnahmeeinheiten gelagerte Werkstücke beispielsweise einer Werkstückbearbeitungsmaschine zuzuführen. Dazu wird eine Anzahl an Paletten auf einem Wagen bereitgestellt, auf dem die Paletten mit den zu bearbeitenden Werkstücken einer Bearbeitungsstation zugeführt oder von einer Bearbeitungsstation zu einer nächsten Bearbeitungsstation verlagert werden können. Die Verlagerung der Wagen kann von Hand oder über verkettete Transportbänder automatisch bewirkt werden. Bei einer Bearbeitungsstation ist eine Stapelzelle vorgesehen, die zur Aufnahme der Wagen dient. Derartige bekannte Stapelzellen können mindestens einen Wagen aufnehmen. Befindet sich ein Wagen in einer Stapelzelle, greift sich beispielsweise ein Werkstückgreifer einer Werkstückbearbeitungsmaschine ein auf einer Palette befindliches Werkstück zur Bearbeitung. Nach der Bearbeitung wird das Werkstück wieder auf der Palette abgelegt und ein nächstes zu bearbeitendes Werkstück aufgenommen. Die Werkstückgreifer müssen hierzu in der Regel programmiert werden, damit sie eine Position auf der Palette ansteuern können, um jeweils ein neues zu bearbeitendes Werkstück greifen zu können. Nach der Bearbeitung aller auf einer Palette befindlichen Werkstücke muss die Palette verlagert werden, sodass die nächste zu bearbeitende Palette eines Wagens mit zu bearbeitenden Werkstücken in den Griffbereich des Werkstückgreifers gebracht werden kann. Nach dem letzten Werkstück einer Palette folgt die Bearbeitung der Werkstücke der nächsten Palette. Während die Werkstücke der letzten Palette eines Wagens von der Werkstückbearbeitungsmaschine bearbeitet werden, wird der Wagen bei herkömmlichen Stapelzellen bereits getauscht, sodass die letzte Palette oder das letzte Werkstück nicht auf seinem ursprünglichen Wagen, sondern beispielsweise auf dem nachfolgenden Wagen abgelegt wird, um eine Verzögerung der Taktzeit zu verhindern. Dies hat jedoch zur Folge, dass eine Charge eines Wagens, also eine Anzahl an Paletten, die sich ursprünglich auf einem Wagen befunden hat, teilweise auf andere Wagen verlagert wird. Dies macht es unmöglich, ein Werkstück während allen Bearbeitungsschritten zu verfolgen und zu jedem Zeitpunkt feststellen zu können, auf welchem Wagen und bei welcher Bearbeitungsstation sich ein Werkstück gerade befindet. Es kommt somit zu Logistikfehlern. Bei anderen bekannten Stapelzellen wird eine Charge eines Wagens dadurch zusammengehalten, dass die Bearbeitung der letzten Palette eines Wagens abgewartet wird, bevor der nächste Wagen mit Werkstücken zur Bearbeitung bereitgestellt wird. Dies hat jedoch eine Verzögerung der Taktzeit einer Werkstückbearbeitungsmaschine zur Folge. Andere bekannte Stapelzellen verlagern eine Palette nach deren Bearbeitung auf einen anderen Wagen. Derartige Stapelzellen weisen jedoch unter anderem den Nachteil auf, dass sie groß bauen und daher viel Platz benötigen. Die oben beschriebene Notwendigkeit, einen Werkstückgreifer zu programmieren, um ein neues zu bearbeitendes Werkstück greifen zu können, ist ein weiterer Nachteil bekannter Stapelzellen. Es zeigt sich, dass eine Chargenverfolgung bei bekannten Stapelzellen nicht gewährleistet werden kann und dass es bei einem Wagenwechsel zu einer Verzögerung der Taktzeit kommen kann, wodurch die Produktivität eines Werkstückbearbeitungsprozesses erheblich vermindert wird.

Eine bekannte Stapelzelle geht aus der FR-A-2 548 636 hervor. Diese weist eine Hubvorrichtung zum Abnehmen aller Aufnahmeeinheiten eines Wagens auf. Durch die Hubvorrichtung werden die Aufnahmeeinheiten nacheinander einem oberhalb der Hubvorrichtung vorgesehenen Übergabebereich zugeführt. Oberhalb des Übergabebereichs befindet sich eine Beförderungseinrichtung, mittels der jeweils eine Aufnahmeeinheit in horizontaler Richtung in den Arbeitsbereich eines Werkstückgreifers verlagerbar ist. Der Werkstückgreifer entnimmt der im Übergabebereich angeordneten Aufnahmeeinheit die darin enthaltenen Werkstücke, bis die Aufnahmeeinheit geleert ist. Danach wird die entleerte Aufnahmeeinheit mittels einer Aufnahmevorrichtung aus dem Übergabebereich heraus verlagert und zwar nach unten, sodass nachfolgend eine weitere Aufnahmeeinheit mittels der Beförderungseinrichtung im Übergabebereich zum Werkstückgreifer verfahrbar ist.

Die Stapelzelle ist so konzipiert, dass bei einem Ausbringen eines Stapels der Aufnahmeeinheiten aus der Stapelzelle und dem Einbringen eines weiteren Stapels der Aufnahmeeinheiten in die Stapelzelle es zu einer Verzögerung der Taktzeit bei der Zuführung der Werkstücke zum Werkzeuggreifer kommen würde. Um dies zu vermeiden wird eine separate Aufnahmeeinheit in die Stapelzelle eingebracht, die praktisch als Puffer dient. Nach Beendigung eines Zyklus zur Zuführung der in den Aufnahmeeinheiten befindlichen Gegenstände kann der Stapel der Aufnahmeeinheiten durch einen neuen Stapel Aufnahmeeinheiten ersetzt werden, wobei die separate Aufnahmeeinheit noch Teile zuliefert. Dies führt dazu, dass bei jedem der Stapelzelle zugeführten Aufnahmeeinheiten als Stapel jeweils eine Aufnahmeeinheit von dem Stapel getrennt und durch eine Aufnahmeeinheit eines vorangegangenen Stapels ersetzt wird. Dies führt zu einer Chargendurchmischung, so dass während des Bearbeitungsprozesses nicht zu jedem Zeitpunkt festgestellt werden kann, auf welchem Wagen und bei welcher Bearbeitungsstation sich ein Werkstück gerade befindet. Es können daher Logistikfehler auftreten.

Aus der US 5 868 545 A geht eine Stapelzelle mit einer ersten Hubvorrichtung zum Aufnehmen einer Anzahl von Aufnahmeeinheiten hervor, welche mittels eines Wagens an die Stapelzelle herangeführt werden. Die Stapelzelle umfasst ferner einen Puffer zur Zwischenlagerung von einer Anzahl von gestapelten Aufnahmeeinheiten, die nachfolgend an die erste Hubvorrichtung überführt werden. Zwischen einem unterhalb eines Werkstückgreifers angeordneten Übergabebereichs und der ersten Hubvorrichtung ist eine weitere, zweite Hubvorrichtung vorgesehen, die eine Anzahl von Aufnahmeeinheiten aufnehmen kann. Mittels einer Beförderungseinrichtung ist jeweils nur eine Aufnahmeeinheit in den Übergabebereich unterhalb des Werkstückgreifers verlagerbar. Während der Werkstückgreifer von der im Übergabebereich angeordneten Aufnahmeeinheit Werkstücke entnimmt, kann eine weitere Aufnahmeeinheit von der ersten Hubvorrichtung an die zweite Hubvorrichtung überführt werden. Ferner wird eine bereits aus dem Übergabebereich zurück zur zweiten Hubvorrichtung verlagerte Aufnahmeeinheit von der zweiten Hubvorrichtung nunmehr an die erste Hubvorrichtung zurückgeführt. Dadurch, dass mehrere Hubvorrichtungen erforderlich sind, werden sowohl die Kosten der Stapelzelle als auch deren Platzbedarf erhöht.

DE 19 607 563 C1 beschreibt eine stapelzelle gemäss dem oberbegriff des Anspruchs 1 und ein verfahren gemäss dem Oberbegriff des Anspruchs 13, wobei nur eine Aufnahmeeinheit in dem übergabebereich anordenbar ist.

Aufgabe der vorliegenden Erfindung ist es daher, eine Stapelzelle und ein Verfahren zum Bereitstellen von auf Aufhahmeeinheiten aufgebrachten Werkstücken der eingangs genannten Art zu schaffen, mittels derer alle Werkstücke und alle Aufnahmeeinheiten eines Wagens nach der Werkstückbearbeitung wieder einem Wagen zugeführt werden können, ohne dass es zu Taktzeitverzögerungen während der Werkstückzuführung kommt.

Zur Lösung dieser Aufgabe wird eine Stapelzelle mit den Merkmalen des Anspruchs 1 vorgeschlagen. Die Stapelzelle dient zur Aufnahme von wenigstens einem Wagen, auf dem eine Anzahl von Aufnahmeeinheiten, insbesondere Paletten anordenbar sind, und zum Bereitstellen von auf den Aufnahmeeinheiten gelagerten Werkstücken in einem Übergabebereich, insbesondere zur Bearbeitung in einer Werkstückbearbeitungsmaschine. Im Folgenden wird die Aufnahmeeinheit rein beispielhaft nur noch als Palette bezeichnet, als Aufnahmeeinheit kann jedoch beispielsweise auch ein Drahtkorb oder dergleichen vorgesehen sein. Die Stapelzelle umfasst eine Hubvorrichtung zum Abnehmen aller Paletten von dem wenigstens einen Wagen, der dadurch von den Paletten vorzugsweise vollständig entkoppelt ist, und außerdem eine Beförderungseinrichtung zum Verlagern wenigstens einer Palette in dem Übergabebereich. In dem Übergabebereich wird wenigstens eine Palette mit der Beförderungseinrichtung entsprechend den gewünschten Taktzeiten einer Werkstückbearbeitungsmaschine verlagert, sodass ein Werkstückgreifer, beispielsweise zur Verlagerung eines Werkstücks zu einer Werkstückbearbeitungsmaschine, automatisch an die richtige Position auf einer Palette greift, um ein fertig bearbeitetes Werkstück abzulegen oder ein zu bearbeitendes Werkstück aufzunehmen. Die Stapelzelle weist ferner eine Aufnahmevorrichtung zur Aufnahme aller Paletten und zur Abgabe dieser an den wenigstens einen Wagen auf. Bei dem wenigstens einen Wagen handelt es sich dabei in vorteilhafter Weise um denselben Wagen, von dem die Hubvorrichtung die Paletten aufnimmt. Die Aufnahmevorrichtung nimmt alle Paletten nacheinander auf, die den Übergabebereich mittels der Beförderungseinrichtung durchlaufen haben und auf denen somit nur noch fertig bearbeitete Werkstücke vorhanden sind.

Die Stapelzelle zeichnet sich dadurch aus, dass wenigstens zwei Aufnahmeeinheiten, beispielsweise Paletten, gleichzeitig in dem Übergabebereich anordenbar und dort mittels der Beförderungseinrichtung gleichzeitig verlagerbar sind. Diese wirkt also sowohl mit der ersten als auch mit der zweiten Palette zusammen und bewirkt auf diese Weise eine gleichzeitige Verlagerung der beiden Paletten. Denkbar ist auch die Anordnung mehrerer Paletten in dem Übergabebereich.

Durch die hier vorgeschlagene Stapelzelle wird gewährleistet, dass eine auf einem Wagen befindliche Charge, also eine Anzahl von zusammengehörigen, mit Werkstücken beladenen Paletten, nach der Bearbeitung der Werkstücke wieder zusammen auf demselben Wagen gelagert wird. Damit bleiben alle Paletten einer Charge während des gesamten Bearbeitungsprozesses auf einem Wagen, sodass jederzeit verfolgt werden kann, welche Charge mit allen zugehörigen Paletten sich zu welchem Zeitpunkt bei welcher Bearbeitungsstation befindet. Ferner werden reibungslose Taktzeiten zwischen aufeinanderfolgenden Wagen gewährleistet, sodass kein Leerlauf bei einer Werkstückbearbeitungsmaschine entsteht, wenn ein nachfolgender Wagen in die Stapelzelle eingebracht werden muss.

Besonders bevorzugt wird eine Stapelzelle, die sich dadurch auszeichnet, dass eine Zentriereinrichtung zum Ausrichten der Paletten vorgesehen ist. Diese befindet sich vorzugsweise ortsnah zu der Beförderungseinrichtung im Übergabebereich. Durch die Zentriereinrichtung können die Paletten in dem Übergabebereich vorzugsweise auf einen zehntel Millimeter genau ausgerichtet werden, sodass gewährleistet ist, dass ein Werkstückgreifer immer an die richtige Position auf der Palette greift.

Weiterhin bevorzugt wird eine Stapelzelle, die sich dadurch auszeichnet, dass eine Einzugseinrichtung zur Beförderung des wenigstens einen Wagens vorgesehen ist. Die Einzugseinrichtung bewirkt in vorteilhafter Weise, dass wenigstens ein mit Paletten beladener Wagen automatisch in die Stapelzelle hineinverlagert werden kann. Insbesondere kann vorgesehen sein, mehrere Wagen über eine entsprechende Kopplung hintereinander in die Stapelzelle über einen Einzugsmechanismus einzuziehen und die auf den Wagen befindlichen Paletten nacheinander dem Übergabebereich zuzuführen. Die Einzugseinrichtung bewirkt auch, dass ein Wagen mit fertig bearbeiteten Werkstücken aus der Stapelzelle hinaus befördert wird.

Auch wird eine Stapelzelle bevorzugt, die sich dadurch auszeichnet, dass sie einen Eingangsbereich zur Aufnahme wenigstens eines Wagens und einen Ausgangsbereich zur Abgabe wenigstens eines Wagens aufweist. Eingangs- und Ausgangsbereich liegen sich vorzugsweise gegenüber. Ein oder mehrere Wagen, die beispielsweise über einen Kopplungsmechanismus miteinander verbunden sind, können so in vorteilhafter Weise insbesondere mittels der Einzugsvorrichtung durch die Stapelzelle hindurchgeführt werden.

Weiterhin wird eine Stapelzelle bevorzugt, die sich dadurch auszeichnet, dass sie einen Grundrahmen und einen Hubrahmen aufweist. Die Stapelzelle besteht also aus zwei Rahmenteilen; sie ist damit besonders flexibel einsetzbar und ermöglicht es beispielsweise, Paletten verschiedener Größen aufzunehmen und der Beförderungseinrichtung zuzuführen.

Bei einer weiteren bevorzugten Stapelzelle umfasst der Hubrahmen die Hubvorrichtung und die Aufnahmevorrichtung. Durch diese Ausgestaltung wird bewirkt, dass die Hubvorrichtung und die Aufnahmevorrichtung von dem Grundrahmen vollständig entkoppelt sind. Auch diese Ausgestaltung trägt somit zu der besonders hohen Flexibilität der hier vorgeschlagenen Stapelzelle bei. Insbesondere kann noch vorgesehen sein, dass der Hubrahmen mit der Zentriereinrichtung zusammenwirkt.

Weiterhin wird eine Stapelzelle bevorzugt, die sich dadurch auszeichnet, dass der Hubrahmen zwei Hubrahmenhälften aufweist, deren Abstand zueinander veränderbar ist. Der Hubrahmen weist wenigstens vier Hubarme auf, von denen jeweils zwei einer Hubrahmenhälfte zugeordnet sind. Diese vorteilhafte Ausgestaltung erzielt eine besonders hohe Flexibilität der Stapelzelle, die sich auf diese Weise an verschiedene Größen und Formen der Paletten, insbesondere in einem Größenbereich von 300 x 300 mm² bis 700 x 700 mm² flexibel dem Palettenformat anpassen lässt. Vorzugsweise kann der veränderliche Abstand der Hubrahmenhälften über ein Handrad in einfacher Art und Weise eingestellt werden.

Auch bevorzugt wird eine Stapelzelle, die sich dadurch auszeichnet, dass der Grundrahmen die Einzugseinrichtung aufweist. Die Einzugseinrichtung kann vorzugsweise über eine entsprechende Steuerung betätigt werden und beispielsweise als Rollenbandeinzug realisiert sein. Die Einzugseinrichtung bewirkt einerseits den Einzug eines Wagens in die Stapelzelle und andererseits die Verlagerung des Wagens in der Stapelzelle.

Weiterhin wird eine Stapelzelle bevorzugt, die sich dadurch auszeichnet, dass die Beförderungseinrichtung einen Zahnriemenantrieb aufweist. Über den Zahnriemenantrieb kann eine Palette in dem Übergabebereich mit sehr hoher Genauigkeit verlagert werden. Es sind jedoch auch andere Antriebe, wie beispielsweise ein Reibschluss zwischen einem Riemen und einer Palette denkbar, um die Beförderungseinrichtung zu realisieren. Vorzugsweise sind auch Rollen vorgesehen, auf denen eine Palette mittels der Beförderungseinrichtung verlagert werden kann.

Schließlich wird eine Stapelzelle bevorzugt, die sich dadurch auszeichnet, dass jeweils die letzte Palette eines Wagens zusammen mit der ersten Palette eines nachfolgenden Wagens zumindest zeitweise in dem Übergabebereich der Stapelzelle angeordnet ist. Durch diese Ausgestaltung der Stapelzelle wird ein reibungsloser Übergang zwischen den Paletten zweier Wagen gewährleistet, sodass beispielsweise bei einer Werkstückbearbeitungsmaschine keinerlei Verzögerungen entstehen.

Zur Lösung der oben genannten Aufgabe wird außerdem ein Verfahren zum Bereitstellen von auf Aufnahmeeinheiten, insbesondere Paletten aufgebrachten Werkstücken, die auf einem Wagen anordenbar sind, mit den Merkmalen des Anspruchs 13 vorgeschlagen. Im Folgenden wird die Aufnahmeeinheit rein beispielhaft nur noch als Palette bezeichnet, als Aufnahmeeinheit kann jedoch beispielsweise auch ein Drahtkorb oder dergleichen vorgesehen sein. Das Verfahren sieht zunächst das Abnehmen aller auf dem Wagen befindlichen Paletten vor. Auf diese Weise wird der Wagen von den Paletten entkoppelt, sodass dieser in der Stapelzelle mittels der Einzugseinrichtung verlagerbar ist. Anschließend erfolgt das Zuführen der Paletten zu einem Übergabebereich, wobei sich zeitweise wenigstens zwei Aufnahmeeinheiten, also beispielsweise Paletten, gleichzeitig in dem Übergabebereich befinden, die dort mittels derselben Beförderungseinrichtung auch gleichzeitig verlagert werden. In dem Übergabebereich können die Werkstücke von einer Palette von einem Werkstückgreifer beispielsweise zur Bearbeitung der Werkstücke in einer Werkstückbearbeitungsmaschine gegriffen werden. Die Paletten werden nach dem Zuführen zu dem Übergabebereich zwischengelagert. Anschließend werden alle Paletten ihrem ursprünglichen Wagen zugeführt. Der wesentliche Vorteil des hier vorgeschlagenen Verfahrens liegt darin, dass alle auf einem Wagen befindlichen Paletten nach deren Bearbeitung beispielsweise durch eine Werkstückbearbeitungsmaschine wieder auf demselben Wagen abgelegt werden, ohne dass es dadurch zu Verzögerungen kommt. Somit kann die Verfolgung einer Charge zu jedem Zeitpunkt während der Bearbeitung eines Werkstücks gewährleistet werden. Insbesondere ist bei dem hier vorgeschlagenen Verfahren vorgesehen, dass der Wagen während des Abnehmens aller Paletten durch die Hubvorrichtung und des Zwischenlagerns aller Paletten durch die Aufnahmevorrichtung von einer Startposition im Bereich der Hubvorrichtung an eine Endposition im Bereich der Aufnahmevorrichtung verlagert wird. Nach der Abnahme der auf einem Wagen befindlichen Paletten ist dieser von den Paletten entkoppelt, sodass er in der Stapelzelle von dem Eingangsbereich zu dem Ausgangsbereich mittels der Einzugseinrichtung verlagert werden kann.

Weitere Ausgestaltungen des hier vorgeschlagenen Verfahrens ergeben sich aus den Unteransprüchen.

Im Folgenden wird die Erfindung anhand der Zeichnung näher erläutert. Es zeigen:
- Figur 1: eine perspektivische Darstellung einer Stapelzelle;
- Figur 2: eine perspektivische Darstellung eines mit Paletten bela- denen Wagens;
- Figur 3: eine Vorderansicht einer Stapelzelle;
- Figur 4: eine Draufsicht auf eine Stapelzelle mit einer Palette, und
- Figur 5: eine Draufsicht auf eine Stapelzelle mit zwei Paletten.

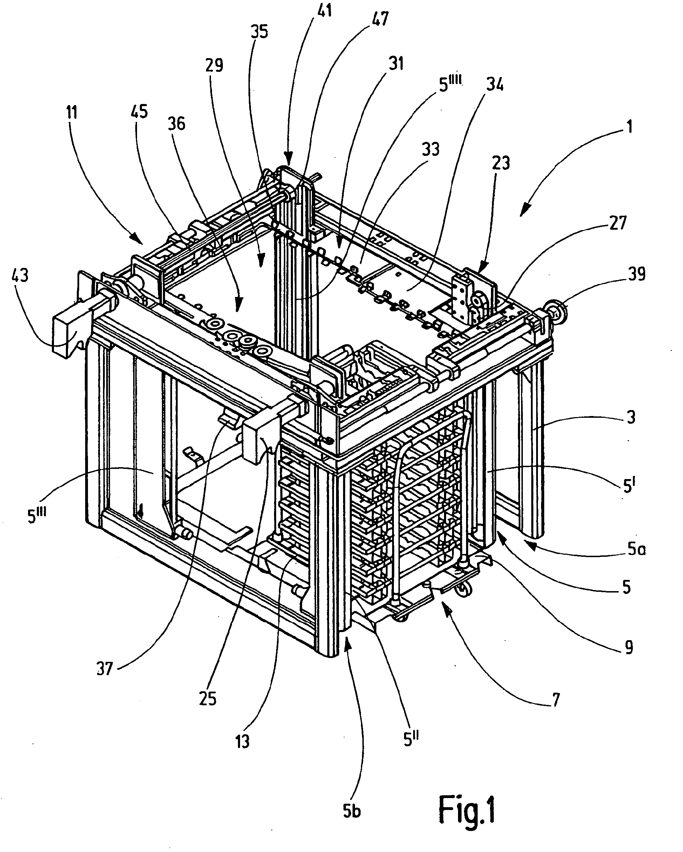

Figur 1 zeigt eine perspektivische Darstellung einer Stapelzelle 1 mit einem äußeren Grundrahmen 3 und einem inneren Hubrahmen 5.

Der Hubrahmen 5 setzt sich aus wenigstens vier Hubarmen 5', 5", 5"', 5"" zusammen, von denen die Hubarme 5' und 5"" eine Hubrahmenhälfte 5a und die Hubarme 5" und 5"' eine weitere Hubrahmenhälfte 5b bilden. Während der Grundrahmen 3 fest auf dem Boden steht, ist der Hubrahmen 5 in einem Abstand zu dem Boden angeordnet, sodass seine Hubarme 5', 5", 5"', 5'''' frei schwebend über dem Boden hängen. Der Abstand der beiden Hubrahmenhälften 5a und 5b ist veränderbar, sodass die Stapelzelle 1 flexibel an verschiedene Palettengrößen anpassbar ist, worauf später noch näher eingegangen wird.

Die vorzugsweise quaderförmig ausgebildete Stapelzelle 1 weist an einer Seite einen Eingangsbereich 7 auf, durch den ein Wagen 9 in die Stapelzelle 1 hineinverlagert werden kann. Die Stapelzelle 1 weist auch einen Ausgangsbereich 11 auf, durch den ein Wagen 9 aus der Stapelzelle 1 hinausbefördert werden kann.

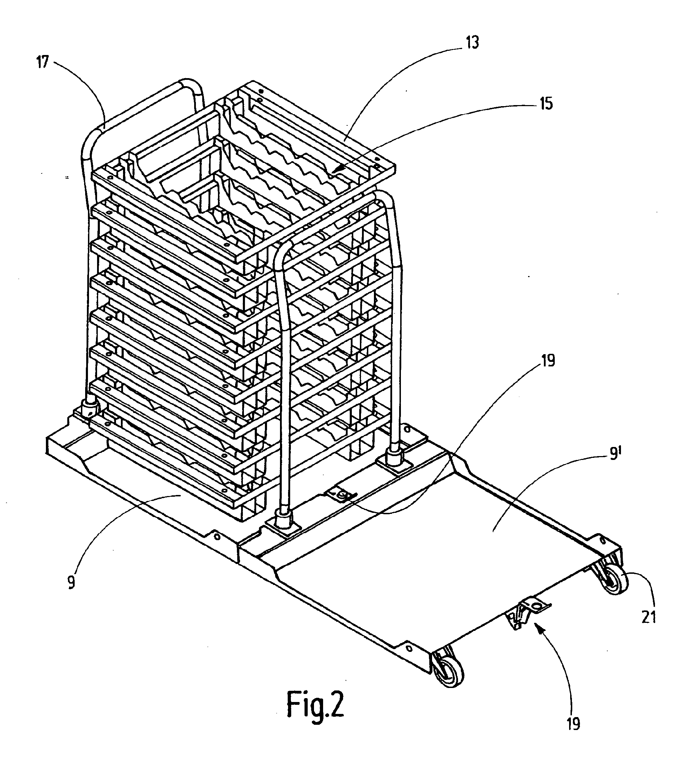

Der Wagen 9 ist in Figur 2 in einer perspektivischen Darstellung ohne die Stapelzelle 1 dargestellt. Auf dem Wagen 9 sind Aufnahmeeinheiten, hier beispielhaft Paletten 13 angeordnet, die Aufnahmeprismen 15 zur Aufnahme eines nicht dargestellten Werkstücks aufweisen. Auf dem in Figur 2 dargestellten Wagen 9 sind hier insgesamt acht Paletten angeordnet. Die Zahl der Paletten 13 ist im Übrigen frei wählbar. Der Wagen 9 weist einen Griff 17 auf, der in seiner Ausgestaltung, insbesondere in seiner Höhe variieren kann. An den Wagen 9 ist ein zweiter Wagen 9' gekoppelt, der keine Paletten 13 aufweist.

Die beiden Wagen 9 und 9' sind über einen Kopplungsmechanismus 19 miteinander verbunden. Der Kopplungsmechanismus 19 kann beispielsweise als Schnappmechanismus ausgeführt sein. Die Betätigung des Mechanismus, insbesondere zum Lösen der Verbindung zwischen den beiden Wagen 9 und 9', kann mechanisch über einen hier nicht dargestellten Hebel erfolgen, sodass die Verbindung zwischen den Wagen 9 und 9' beispielsweise per Fußbetätigung gelöst werden kann. Es ist jedoch auch eine ferngesteuerte Betätigung des Kopplungsmechanismus 19, beispielsweise über eine entsprechende Funkansteuerung denkbar. Die Wagen 9 beziehungsweise 9' sind über Rollen 21 verlagerbar, sodass diese leicht von einer Position zu einer nächsten Position befördert werden können.

Die in Figur 1 dargestellte Stapelzelle 1 weist vorzugsweise eine nicht dargestellte Einzugseinrichtung auf. Die Einzugseinrichtung wirkt mit einem Wagen 9 zusammen, sobald dieser in den Eingriffsbereich der Einzugseinrichtung gelangt. Die Einzugseinrichtung bewirkt, dass der Wagen 9 in seine in Figur 1 dargestellte Startposition in der Stapelzelle 1 verlagert wird. Die Einzugseinrichtung ist vorzugsweise an dem Grundrahmen 3 vorgesehen und greift unter dem Hubrahmen hindurch an dem Wagen 9 an. Sie kann beispielsweise über einen Rollenbandeinzugsmechanismus oder dergleichen realisiert werden. Vorzugsweise ist eine automatische Betätigung der Einzugseinrichtung über eine entsprechende Steuerung, die beispielsweise mit Sensoren zusammenwirkt, vorgesehen.

Der Hubrahmen 5 weist an den Hubarmen 5' und 5" eine Hubvorrichtung 23 auf. Die Hubvorrichtung 23 wird über einen Antrieb 25 und eine hier nicht dargestellte Welle realisiert, die einerseits mit dem Hubarm 5' und andererseits mit dem Hubarm 5" verbunden ist. Sowohl der Hubarm 5' als auch der Hubarm 5" weisen einen Riemen 27 auf, der in der Darstellung gemäß Figur 1 lediglich an dem Hubarm 5' erkennbar ist. Über den Antrieb 25 und die nicht dargestellte Welle werden die Riemen betätigt, die mit hier nicht dargestellten Hebeln zusammenwirken, die an den Paletten 13 angreifen und diese von dem Wagen 9 abnehmen können. Die Hubvorrichtung 23 dient dazu, insbesondere alle Paletten 13 von dem Wagen 9 abzunehmen, sodass dieser von den Paletten 13 quasi entkoppelt ist. Über die Hubvorrichtung 23 können die Paletten 13 in einer vertikalen Richtung in der Stapelzelle 1 nach oben oder nach unten, je nach Drehrichtung des Antriebs 25, verlagert werden. Die Hubvorrichtung 23 ermöglicht es auch, die Paletten 13 nacheinander einem Übergabebereich 29 zuzuführen, in dem die auf den Paletten 13 gelagerten Werkstücke beispielsweise zur Bearbeitung in einer Werkstückbearbeitungsmaschine bereitgestellt werden.

In dem Übergabebereich 29 ist eine Zentriereinrichtung 31 vorgesehen, die vorzugsweise vier Selektierschlitten aufweist, von denen hier nur zwei Selektierschlitten 33 und 34 erkennbar sind. Die anderen beiden, hier nicht erkennbaren Selektierschlitten befinden sich auf der gegenüberliegenden Seite der Stapelzelle 1. Die Selektierschlitten 33 und 34 weisen Rollen 35 auf, auf denen eine Palette 13 mittels einer Beförderungseinrichtung 36 in dem Übergabebereich 29 verlagert werden kann. Die Beförderungseinrichtung 36 weist einen Antrieb 37 auf, der beispielsweise einen Zahnriemen antreibt, der, wie später noch deutlich wird, mit einer Palette 13 in Eingriff stehen kann. Die Beförderungseinrichtung 36 kann beispielsweise auch mittels eines Reibschlusses oder dergleichen realisiert werden. Sie ist an den Selektierschlitten 33' und 34' vorzugsweise drehbar gelagert, sodass bei einer Verlagerung der Selektierschlitten auch eine Verlagerung der Beförderungseinrichtung 36 bewirkt wird.

Wie später noch deutlich wird, wirkt die Beförderungseinrichtung 36 zusammen mit der Zentriereinrichtung 31 als Positionierungseinheit für die Paletten 13, was entscheidend für den reibungslosen Ablauf der Werkstückbereitstellung in dem Übergabebereich 29 ist. Es sei an dieser Stelle bereits vorweggenommen, dass die Beförderungseinrichtung 36 durch ihre vorteilhafte Ausgestaltung mehrere Paletten 13 gleichzeitig befördern kann, wodurch eine synchrone Taktung sämtlicher Paletten 13 in dem Übergabebereich 29 gewährleistet wird.

Die Beförderungseinrichtung 36 und die Zentriereinrichtung 31 wirken mit dem Hubrahmen 5 derart zusammen, dass sie einer Bewegung der Hubarme 5', 5", 5''' und 5'''' beziehungsweise der Hubrahmenhälften 5a und 5b aufeinander zu oder voneinander weg folgen. Die Einstellung des Abstands zwischen den Hubrahmenhälften 5a und 5b kann besonders einfach über ein Handrad 39 bewirkt werden. Die flexible Ausgestaltung des Hubrahmens 5 ermöglicht es in vorteilhafter Weise, unterschiedliche Palettengrößen in dem Übergabebereich 29 aufzunehmen, worauf später noch näher eingegangen wird.

Die Stapelzelle 1 weist auch eine Aufnahmevorrichtung 41 auf, die an den Hubarmen 5''' und 5'''' des Hubrahmens 5 vorgesehen ist. Die Aufnahmevorrichtung 41 dient zur Aufnahme von Paletten 13 aus dem Übergabebereich 29, die diesen mittels der Beförderungseinrichtung 36 durchlaufen haben. Sie wird durch einen Antrieb 43 und eine Welle 45 realisiert, die sowohl mit dem Hubarm 5''' als auch mit dem Hubarm 5'''' in Verbindung steht. An jedem Hubarm 5''' und 5'''' ist ein Riemen 47 vorgesehen, der in Figur 1 nur bei dem Hubarm 5'''' erkennbar ist. Der Riemen 47 wird über die vorzugsweise profilierte und von dem Antrieb 43 angetriebene Welle 45 betätigt. Entsprechend der Hubvorrichtung 23 bewirkt die Aufnahmevorrichtung 41 so über hier nicht dargestellte Hebel die Aufnahme und Verlagerung einer oder mehrerer Paletten 13 in einer vertikalen Richtung an der Endposition in der Stapelzelle 1, die sich im Bereich der Aufnahmevorrichtung 41 befindet.

Sowohl die Realisierung der Hubvorrichtung 23 also auch die Realisierung der Aufnahmevorrichtung 41 sind hier rein beispielhaft und können auch auf andere Art und Weise realisiert werden. Entscheidend ist lediglich die Möglichkeit der Abnahme und Aufnahme von Paletten 13 und deren Verlagerung in vertikaler Richtung in der Stapelzelle 1.

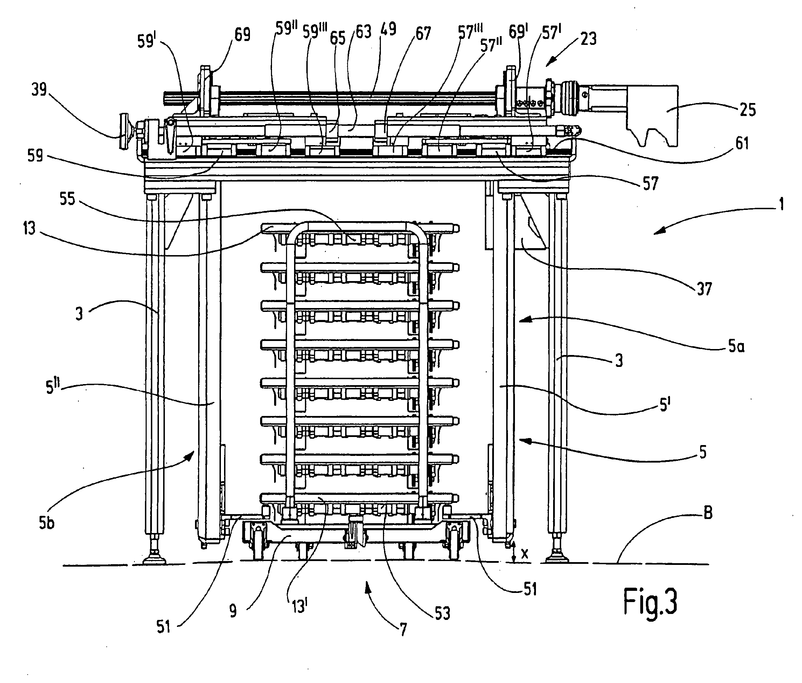

Figur 3 zeigt eine Vorderansicht einer Stapelzelle 1. Gleiche Teile sind mit gleichen Bezugszeichen versehen, sodass insofern auf die Beschreibung zu den vorangegangenen Figuren verwiesen wird, um Wiederholungen zu vermeiden.

In der Darstellung gemäß Figur 3 ist der der Hubvorrichtung 23 zugeordnete Antrieb 25 abweichend von Figur 1 auf der rechten Seite des Eingangsbereichs 7 angeordnet, wodurch die Funktion der Stapelzelle 1 jedoch in keiner Weise beeinflusst wird.

Erkennbar in Figur 3 ist nun auch eine Welle 49, die in Figur 1 aus Gründen der Übersichtlichkeit nicht dargestellt ist und die mit dem Antrieb 25 zur Realisierung der Hubvorrichtung 23 zusammenwirkt.

In Figur 3 dargestellt sind auch Hebel 51, die vorzugsweise in Eingriff mit der untersten auf dem Wagen 9 gelagerten Palette 13' stehen. Bei einer Betätigung der Hubvorrichtung 23 greifen die Hebel 51 an einer Unterseite 53 der untersten Palette 13' an und bewirken somit eine Verlagerung aller Paletten 13 in einer vertikalen Richtung in der Stapelzelle 1. Eine mit Werkstücken 55 beladene Palette 13 kann so über die Hubvorrichtung 23 in den Übergabebereich 29 verlagert werden. In dem Übergabebereich 29 kann ein zu bearbeitendes Werkstück 55 beispielsweise von einem Werkstückgreifer einer Werkstückbearbeitungsmaschine gegriffen werden.

Die Position des Wagens 9 in der Stapelzelle 1 gemäß Figur 3 entspricht der Startposition, wie sie in Figur 1 dargestellt ist. Der Wagen 9 wurde also über die an dem Grundrahmen 3 vorgesehene hier nicht dargestellte Einzugseinrichtung in die Stapelzelle 1 hineinverlagert. In der Startposition des Wagens 9 sind ferner die Hebel 51 unter der untersten Palette 13' angeordnet.

Im Folgenden soll auf den Hubrahmen 5 näher eingegangen werden. Die Hubarme 5' und 5" sind an Schlitten 57 und 59 befestigt, die auf einer Linearführung 61 gelagert sind und entlang dieser verlagerbar sind. Auf der Linearführung 61 sind noch weitere gleichartige Schlitten 57', 57" und 57''' beziehungsweise 59', 59" und 59''' vorgesehen, auf die hier nicht näher eingegangen werden soll. Die Schlitten 57 und 59 stehen mit auf einer Führungswelle 63 gelagerten Verbindungselementen 65 und 67 in Verbindung. Zur Verlagerung der Verbindungselemente 65 und 67 entlang der Linearführung 61, umfasst die Welle 63 sowohl ein Rechtsgewinde als auch ein Linksgewinde, die mit den Verbindungselementen 65 und 67 zusammenwirken. Bei einer Betätigung des Handrads 39 wird das Verbindungselement 65 so beispielsweise nach links und das Verbindungselement 67 nach rechts verlagert. Dies bewirkt wiederum eine Verlagerung der Schlitten 57 und 59 und damit eine Verlagerung der Hubrahmenhälften 5a und 5b aufeinander zu oder voneinander weg.

Es wird deutlich, dass sich bei einer Verlagerung der Hubrahmenhälften 5a und 5b auch die Hubvorrichtung 23 und die Aufnahmevorrichtung 41 verlagern. Da auf diese Weise auch die Hebel 51 einen mehr oder weniger großen Abstand zueinander aufweisen, sind verschiedene Palettenformate von der Hubvorrichtung 23 und von der Aufnahmevorrichtung 41 aufnehmbar. Bei einem kleineren Palettenformat ist vorgesehen, dass die Hubrahmenhälften 5a und 5b einen kleineren Abstand zueinander aufweisen, sodass die Hebel 51 an der Unterseite 53 der Palette 13' angreifen können.

Bei einer Verlagerung der Hubrahmenhälften 5a und 5b aufeinander zu oder voneinander weg, erfolgt im Übrigen eine Relativbewegung zwischen der Welle 49 und dem Hubarm 5" beziehungsweise zwischen der in Figur 1 gezeigten Welle 45 und dem Hubarm 5"". Im Folgenden sei nur Bezug auf die Welle 49 genommen, gleiches gilt auch für die Welle 45. Die Welle 49 ist in einem oberen Ende 69 des Hubarms 5" gelagert. Der mit der Welle 49 gekoppelte Antrieb 25 hingegen ist fest mit dem oberen Ende 69' des Hubarms 5' verbunden, sodass zwischen der Welle 49 und dem Hubarm 5' keine Relativbewegung bei einer Verlagerung der Hubrahmenhälften 5a und 5b stattfindet.

Figur 3 macht noch einmal deutlich, dass der Hubrahmen 5 nicht wie der Grundrahmen 3 auf einem Boden B steht, sondern mit einem Abstand X zu dem Boden angeordnet ist, also frei schwebend von der wenigstens einen Linearführung 61 getragen wird, die wiederum von dem Grundrahmen 3 getragen wird und die sich vorzugsweise auf dessen Oberseite abstützt.

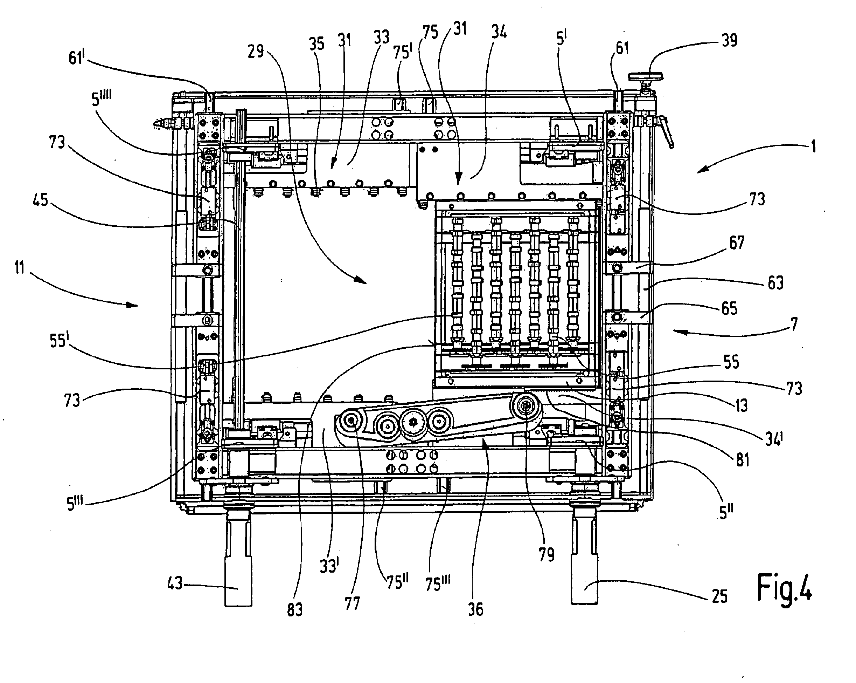

Figur 4 zeigt eine Draufsicht auf die Stapelzelle 1 gemäß den Figuren 1 und 3. Gleiche Teile sind mit gleichen Bezugszeichen versehen, sodass insofern auf die Beschreibung zu den vorangegangenen Figuren verwiesen wird, um Wiederholungen zu vermeiden.

In Figur 4 befindet sich eine mit Werkstücken 55 beladene Palette 13 in dem Übergabebereich 29 der Stapelzelle 1. Die über den Antrieb 25 angetriebene Hubvorrichtung 23 befördert die Paletten 13 über die hier nicht dargestellten Hebel 51 in vertikaler Richtung, solange bis die oberste Palette 13 in dem Übergabebereich 29 angeordnet ist. Die oberste Palette 13 wird sodann von den Selektierschlitten 34 und 34' erfasst, sodass sie auf den Rollen 35 aufliegt. Die Selektierschlitten 33, 33', 34 und 34' und damit die Beförderungseinrichtung 36 realisieren so eine Zentriereinrichtung 31, die es ermöglicht, die Palette 13 auf ein zehntel Millimeter genau in dem Übergabebereich 29 zu positionieren.

Die Selektierschlitten 33, 33', 34 und 34' sind über vorzugsweise pneumatisch betätigbare Zylinder 73 in dem Übergabebereich 29 verlagerbar. Die Verlagerung der Selektierschlitten 33, 33', 34 und 34' erfolgt entlang der Linearführung 61 und einer weiteren Linearführung 61', die auf der gegenüberliegenden Seite der Stapelzelle 1 angeordnet ist, sowie über Linearführungen 75, 75', 75" und 75'''. Die Zentriereinrichtung 31 ist in dem Übergabebereich 29 angeordnet und verlagert sich bei einer Verlagerung der Hubrahmenhälften 5a und 5b ebenfalls aufeinander zu oder voneinander weg.

Die Beförderungseinrichtung 36 steht mit den Selektierschlitten 33' und 34' über Drehpunkte 77 und 79 in Verbindung. Bei einer Verlagerung eines Selektierschlittens 33' oder 34' erfolgt somit auch eine Verlagerung der Beförderungseinrichtung 36. Mit der Zentrierung einer in dem Übergabebereich 29 angeordneten Palette 13 erfolgt somit gleichzeitig die Verlagerung der Palette 13 durch die Beförderungseinrichtung 36.

In Figur 4 ist erkennbar, dass die Palette 13 eine Zahnstruktur 81 aufweist, in die ein mit der Beförderungseinrichtung 36 zusammenwirkender Zahnriemen eingreifen kann. Sobald die Selektierschlitten 34 und 34' mittels der Zylinder 73 an der Palette 13 angreifen und diese zentrieren, steht somit automatisch auch die Beförderungseinrichtung 36 in Eingriff mit der Palette 13, die sich bei einer Verlagerung des Selektierschlittens 34' automatisch mit verlagert. Gleiches gilt im Übrigen für die Selektierschlitten 33 und 33'.

Es zeigt sich also, dass der Zahnriemen der Beförderungseinrichtung 36 zumindest teilweise von der Palette 13 entkoppelt werden kann, damit eine fertige Palette 13 abgestapelt und eine neue Palette 13 in den Übergabebereich 29 aufgenommen werden kann.

Zusammenfassend wird die Beförderung der Palette 13 durch einen Zahnriemen mit außenliegenden Zähnen, also quasi durch einen "umgedrehten" Zahnriemen bewirkt, der in ein gegenläufiges Profil der Palette 13, nämlich in die Zahnstruktur 81 eingreift, wodurch die Palette 13 gleichzeitig exakt positioniert wird.

Insgesamt zeigt sich, dass bei der hier vorgeschlagenen Stapelzelle 1 die Beförderungseinrichtung 36 insbesondere in Verbindung mit der Zentriereinrichtung 31 gleichzeitig als Positionierungseinrichtung wirkt. Dadurch kann der zur Aufnahme eines Werkstücks dienende Greifer eines Werkstückwechselsystems wesentlich einfacher ausgebildet sein, da dieser ohne einen Ausrichtvorgang gegenüber der Palette 13 nur noch immer an dieselbe Position nach dem Werkstück zu greifen braucht. Durch die Beförderungseinrichtung 36 wird sich ein zu bearbeitendes Werkstück zur richtigen Zeit immer an der richtigen Position befinden. Auf diese Weise entfällt eine Steuerung des Werkstückgreifers, vielmehr wird quasi eine intelligente Palette 13 geschaffen, welche durch die Positionierungseinrichtung beziehungsweise durch die Beförderungseinrichtung 36 zu jedem Takt exakt positioniert ist.

Während also eine exakte Positionierung der Paletten 13 noch keine allzu große Rolle spielt, solange sie im Bereich der Hubvorrichtung 23 angeordnet sind, ist die exakte Ausrichtung in dem Übergabebereich 29 umso wichtiger. Mit der hier vorgeschlagenen Positionierungseinrichtung, insbesondere mit der Beförderungseinrichtung 36 kann eine Positionierung mit einer Genauigkeit im Bereich von 1/10 mm erreicht werden.

Entscheidend ist auch, dass die Beförderungseinrichtung 36 zwei Paletten 13 gleichzeitig befördern kann. Dieser Umstand wird im Folgenden anhand Figur 4 näher erläutert.

Figur 4 macht deutlich, dass die in dem Übergabebereich 29 angeordnete Palette 13 mit der Beförderungseinrichtung 36 in Eingriff steht. Insbesondere wird deutlich, dass der Zahnriemen der Beförderungseinrichtung 36 in die Zahnstruktur 81 der Palette 13 eingreift. Bei einer Verlagerung des Zahnriemens in Richtung des Ausgabebereichs 11 erfolgt somit auch eine Verlagerung der Palette 13.

Sind nun zwei Paletten 13 in dem Übergabebereich 29 hintereinander angeordnet, ist es entscheidend, dass diese synchron verlagert werden, um dem Takt des Werkstückgreifers gerecht zu werden. Alle vier Selektierschlitten 33, 33', 34 und 34' werden hierzu in den Übergabebereich 29 verlagert. Mit den Selektierschlitten 33' und 34' verlagert sich auch die Beförderungseinrichtung 36 in den Übergabebereich 29 hinein. Jeweils eine Beförderungseinrichtung 36 ist hierzu vorzugsweise beweglich, insbesondere drehbar an den Selektierschlitten 33, 34 beziehungsweise 33', 34' gelagert. Es versteht sich, dass auch die gegenüberliegenden Selektierschlitten 33 und 34 eine Beförderungseinrichtung aufweisen können.

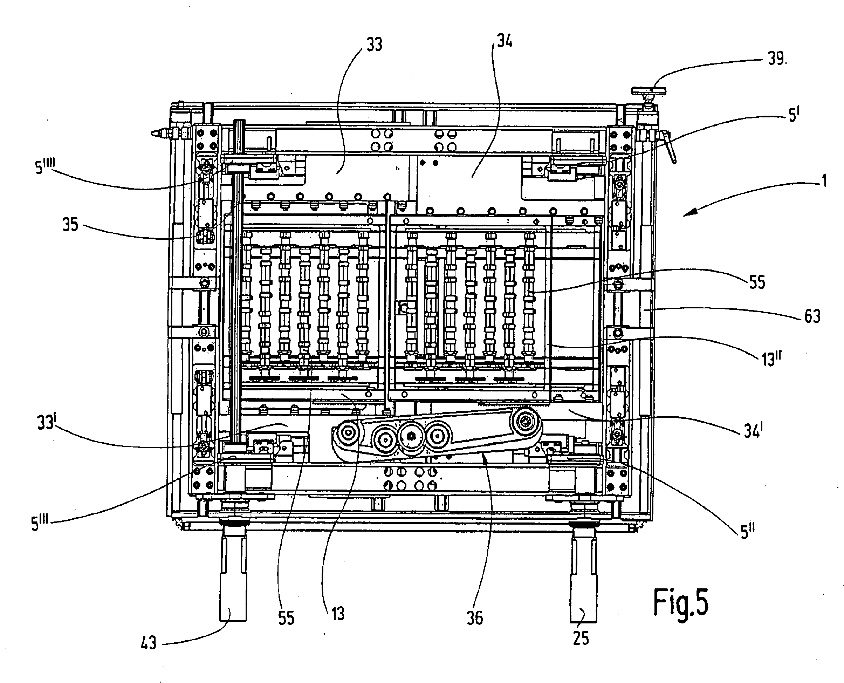

Die Selektierschlitten werden so weit in den Übergabebereich 29 verlagert, bis der Zahnriemen der Beförderungseinrichtung 36 in die Zahnstrukturen 81 beider Paletten 13 eingreift. In dieser Funktionsstellung bewirkt die Beförderungseinrichtung 36 somit eine gleichzeitige Verlagerung beider Paletten 13 und zwar solange, bis eine Palette 13 in einem Bereich des Übergabebereichs 29 angelangt ist, in dem sie von der Aufnahmevorrichtung 41 erfasst werden kann. Erst dann wird der Eingriff der Beförderungseinrichtung 36 an der jeweiligen Palette 13 durch das Zurückfahren der Selektierschlitten 33 und 33' gelöst, wie in den Erläuterungen zu Figur 5 noch deutlich wird.

Die Selektierschlitten 33 und 33' befinden sich zu Beginn der Bewegung der Palette 13 in dem Übergabebereich 29 noch in einer äußeren Position, in der die Selektierschlitten 33 und 33' einen größeren Abstand zueinander aufweisen als die Selektierschlitten 34 und 34'. Sobald die Palette 13 mittels der Beförderungseinrichtung 36 so weit verlagert wurde, dass die vordere Kante 83 der Palette 13 nicht mehr in Eingriff mit den Selektierschlitten 34 und 34' steht ist, es erforderlich, auch die Palette 13 durch die durch die Selektierschlitten 33 und 33' gebildete Zentriereinrichtung 31 exakt in dem Übergabebereich 29 zu positionieren. Die Selektierschlitten 33 und 33' verringern also ihren Abstand zueinander, sodass die Rollen 35 die Palette 13 aufnehmen können und die Palette 13 zentriert wird. Mit der Verlagerung der Selektierschlitten 33 und 33' findet auch eine Verlagerung der Beförderungseinrichtung 36 statt, sodass diese nun wiederum in Eingriff mit der Zahnstruktur 81 der Palette 13 steht. Die Beförderungseinrichtung 36 kann auf unterschiedliche Art und Weise realisiert werden und ist nicht beschränkt auf die hier dargestellte Ausführungsform.

Figur 5 zeigt noch eine Draufsicht auf eine Stapelzelle 1 mit zwei Paletten 13 und 13". Gleiche Teile sind mit gleichen Bezugszeichen versehen, sodass insofern auf die Beschreibung zu den vorangegangenen Figuren verwiesen wird, um Wiederholungen zu vermeiden.

Figur 5 zeigt eine Palette 13, die den Übergabebereich 29 durchlaufen hat und von der hier nicht erkennbaren Aufnahmevorrichtung 41 aufgenommen wurde. Die Palette 13 befindet sich somit nicht mehr in dem Übergabebereich 29 sondern in einer vertikalen Position zwischen dem Boden B und dem Übergabebereich 29. Die Palette 13 wird also von dem Wagen 9 entkoppelt von der Aufnahmevorrichtung 41 gehalten. Die Selektierschlitten 33 und 33' sind in ihre äußere Position verlagert worden, um der Aufnahmevorrichtung 41 eine Verlagerung der Palette 13 in vertikaler Richtung nach unten in Richtung Boden zu ermöglichen. Um die nachfolgende Palette 13" weiterhin zu zentrieren, müssen die Selektierschlitten 33 und 33' anschließend wieder in ihre nicht dargestellte "geschlossene" Position verlagert werden. Sobald sich auch die Palette 13" im Ausgangsbereich 11 der Stapelzelle 1 beziehungsweise im Eingriffsbereich der Aufnahmevorrichtung 41 befindet, wird die Zentrierung der Palette 13" gelöst, die Selektierschlitten 33 und 33' und die Beförderungseinrichtung 36 also aus dem Eingriff der Palette 13" gebracht, die dann von der Aufnahmevorrichtung 41 zwischengelagert wird. In dem Übergabebereich 29 befinden sich somit zeitweise zwei Paletten 13 und 13", die von derselben Beförderungseinrichtung 36 gleichzeitig verlagert werden können. Insbesondere kann vorgesehen sein, den Übergabebereich 29 noch zu verlängern, sodass mehrere Paletten 13 dort anordenbar sind. Bei einer entsprechend längeren Ausgestaltung der Beförderungseinrichtung 36, insbesondere des Zahnriemens, ist es dann möglich, mehr als zwei Paletten 13 gleichzeitig durch dieselbe Beförderungseinrichtung 36 zu verlagern.

Im Folgenden soll auf das Verfahren gemäß der vorliegenden Erfindung näher eingegangen werden.

Zum Bereitstellen von auf Paletten 13 befindlichen Werkstücken 55 ist zunächst vorgesehen, dass ein Wagen 9, wie es in Figur 1 gezeigt ist, über einen Eingangsbereich 7 vorzugsweise automatisch über eine Einzugseinrichtung in die Stapelzelle 1 hinein an eine Startposition verlagert wird. An dem Wagen 9, der sich nun an der Startposition in der Stapelzelle 1 gemäß Figur 1 befindet, können über Kopplungseinrichtungen 19 weitere Wagen gekoppelt sein. Diese werden bei einem Einzug des Wagens 9 ebenfalls in Richtung des Eingangsbereichs 7 verlagert.

In der in Figur 1 gezeigten Position des Wagens 9 greifen Hebel 51 der Hubvorrichtung 23 an der Unterseite 53 der untersten Palette 13' an. Bei einer Betätigung des Antriebs 25 der Hubvorrichtung 23 werden alle auf dem Wagen 9 befindlichen Paletten 13 in einer vertikalen Richtung in der Stapelzelle 1 nach oben verlagert, sodass die Paletten 13 von dem Wagen 9 entkoppelt sind. Die Paletten 13 werden mittels der Hubvorrichtung 23 in der Stapelzelle 1 so weit nach oben gefahren, bis die oberste Palette 13 gemäß Figur 4 in dem Übergabebereich 29 angeordnet ist. Sodann wird die Palette 13 in dem Übergabebereich 29 mittels der Zentriereinrichtung 31, die durch Selektierschlitten 34 und 34' realisiert ist, zentriert. Mittels der Beförderungseinrichtung 36 wird die Palette 13 mit den zu bearbeitenden Werkstücken 55 nun in dem Übergabebereich 29 verlagert. Die Verlagerung der Palette 13 mittels der Beförderungseinrichtung 36 erfolgt getaktet. Die Taktung ist dabei mit der Bearbeitungsdauer eines Werkstücks 55 in einer Werkstückbearbeitungsmaschine synchronisiert. Das heißt, dass ein nicht dargestellter Werkstückgreifer, der beispielsweise mit einer Werkstückbearbeitungsmaschine zusammenwirkt, immer an die gleiche Position des Übergabebereichs 29 greift und so das erste Werkstück 55' greift und dieses zu der Werkstückbearbeitungsmaschine befördert. Nach der Bearbeitung des Werkstücks 55' legt der Werkstückgreifer das Werkstück 55' zurück an seine ursprüngliche Position in der Palette 13. Die Beförderungseinrichtung 36 verlagert die Palette 13 nun so weit in dem Übergabebereich 29 nach links, bis das nächste zu bearbeitende Werkstück 55 im Eingriffsbereich des Werkstückgreifers angeordnet ist. Abhängig von dem Werkstückgreifer kann die Beförderungseinrichtung 36 auch zu einem anderen Zeitpunkt die Palette 13 verlagern. Entscheidend ist lediglich, dass die Beförderungseinrichtung 36 mit dem Takt des Werkstückgreifers synchronisiert ist.

Nach der Bearbeitung eines Werkstücks 55 greift sich der Werkstückgreifer das nächste zu bearbeitende Werkstück 55 und verlagert dieses wiederum in eine Werkstückbearbeitungsmaschine. Dieser Vorgang wiederholt sich so oft, bis alle Werkstücke 55 der Palette 13 bearbeitet wurden und diese wieder auf der Palette angeordnet sind.

Sobald die Palette 13 in dem Übergabebereich 29 genügend weit verlagert wurde, können die Selektierschlitten 34 und 34' aus dem Eingriff der Palette 13 genommen werden. Die Selektierschlitten 34 und 34' müssen mittels der Zylinder 73 nun so weit auseinander verlagert werden, dass die nächste nun oberste Palette 13 des Palettenstapels des Wagens 9 von der Hubvorrichtung 23 in den Übergabebereich 29 befördert werden kann.

Dabei muss, wie gesagt, gewährleistet sein, dass die erste in dem Übergabebereich 29 vorhandene Palette 13 so weit nach links verlagert wurde, dass diese von den Selektierschlitten 33 und 33' selektiert wurde. Zur Beförderung der nächsten Palette in den Übergabebereich 29 wird wiederum die Hubvorrichtung 23 betätigt, die wiederum die oberste Palette 13 der restlichen Paletten 13 in den Eingriffsbereich der Zentriereinrichtung 31 befördert. Die Palette 13 wird wiederum von der Zentriereinrichtung 31 exakt in dem Übergabebereich 29 positioniert, sodass gewährleistet ist, dass ein Werkstückgreifer, der in dem Übergabebereich 29 immer an die gleiche Stelle greift, in jedem Fall ein Werkstück 55 zu greifen bekommt.

Sobald die nächste Palette 13 des Palettenstapels in dem Übergabebereich 29 angeordnet ist, befinden sich somit insgesamt zwei Paletten in dem Übergabebereich 29. Nachdem das letzte Werkstück 55 der ersten Palette 13, wie anhand von Figur 5 erläutert, von dem Werkstückgreifer an seine ursprüngliche Position auf die Palette 13 zurückgelegt wurde, werden die nachfolgende Palette 13" und die erste Palette 13 von der Beförderungseinrichtung 36 um einen Takt weiter in dem Übergabebereich 29 nach links verlagert, sodass das erste zu bearbeitende Werkstück 55 der nachfolgenden Palette 13" im Eingriffsbereich des Werkstückgreifers angeordnet ist.

Bei der Bearbeitung von auf zwei Paletten untergebrachten Werkstücken entsteht also keinerlei Zeitverzögerung, sodass ein Werkstückgreifer direkt nach der Ablage eines letzten bearbeiteten Werkstücks 55 einer Palette 13 dieses an seiner ursprünglichen Position ablegt und nach genau einer Taktzeit das erste zu bearbeitende Werkstück 55 der nachfolgenden Palette 13" greifen kann. Im Übrigen ist somit gewährleistet, dass alle Werkstücke 55 nach der Bearbeitung wieder in ihrer ursprünglichen Palette 13 abgelegt werden.

Sobald also alle Werkstücke 55 einer Palette 13 bearbeitet wurden und diese wieder an ihren ursprünglichen Positionen auf der Palette 13 angeordnet sind, kommt die Aufnahmevorrichtung 41 zum Einsatz, die die Palette 13 mit fertig bearbeiteten Werkstücken 55 zwischenlagert. Auch nachfolgende Paletten 13 mit fertig bearbeiteten Werkstücken 55, die in dem Übergabebereich 29 verlagert wurden, werden von der Aufnahmevorrichtung 41 aufgenommen und zwischengelagert.

Zur Aufnahme durch die Aufnahmevorrichtung 41 werden in den Figuren nicht dargestellte Hebel der Aufnahmevorrichtung 41 an die Unterseite einer Palette 13 verlagert, oder die Palette 13 wird auf einer von der Aufnahmevorrichtung 41 bereits zwischengelagerten Palette 13 abgelegt. Anschließend wird die Palette 13 aus dem Eingriff der Zentriereinrichtung 31 befreit, die Selektierschlitten 33 und 33' also auseinander bewegt, sodass deren Abstand zueinander größer wird und die Rollen 35 nicht mehr unter der Palette 13 angeordnet sind. Die Palette 13 wird über die Aufnahmevorrichtung 41 dann nach unten bewegt, sodass die Zentriereinrichtung 31 die nachfolgende Palette 13 in dem Übergabebereich 29 gemäß Figur 5 wieder aufnehmen kann.

Es zeigt sich also, dass sich zeitweise wenigstens zwei Paletten 13 in dem Übergabebereich 29 befinden, wodurch eine exakte Taktung zwischen zwei nachfolgenden Paletten gewährleistet werden kann.

Wenn die letzte Palette 13' gemäß Figur 3 durch die Hubvorrichtung 23 dem Übergabebereich 29 zugeführt wird, kann der Wagen 9, der durch die Hubvorrichtung 23 von den Paletten 13 vollständig entkoppelt ist, mittels der Einzugsvorrichtung in der Stapelzelle 1 von der in Figur 1 gezeigten Startposition des Wagens 9 in eine Endposition im Bereich der Aufnahmevorrichtung 41 verlagert werden, sodass der leere Wagen 9 also nun in einer Endposition nahe des Ausgangsbereichs 11 angeordnet ist.

Ab diesem Zeitpunkt, wenn sich also der Wagen 9 in seiner Endposition in der Stapelzelle 1 befindet, kann bereits ein neuer mit Paletten beladener Wagen in die Stapelzelle 1 eingezogen werden, der dann an der Startposition angeordnet ist.

Insbesondere ist vorgesehen, dass die Wagen derart aneinandergekoppelt sind, dass bei einer Verlagerung eines in der Stapelzelle 1 befindlichen Wagens 9 von der Startposition in die Endposition der nachfolgende Wagen automatisch an die Startposition der Stapelzelle befördert wird. Auf diese Weise kann eine ganze Kette von Wagen, beispielsweise 5 bis 6 Wagen, hintereinander ohne Zeitverzögerung automatisch in der Stapelzelle 1 abgefertigt werden. Jeder Wagen weist dann am Ausgang exakt dieselben Paletten 13 mit exakt denselben Werkstücken 55 auf, die er vor Eintritt in die Stapelzelle 1 geladen hatte.

Jeder Wagen wird automatisch seinen nachfolgenden Wagen in die Stapelzelle 1 ziehen, sobald er von der Startposition in die Endposition verlagert wird. Die Stapelzelle 1 holt sich auf diese Weise selbstständig und vollautomatisch Nachschub an zu bearbeitenden Werkstücken. Sobald ein Wagen 9 in der Endposition wieder mit seinen ursprünglichen Paletten 13 beladen ist, wird er aus der Stapelzelle 1 befördert, sodass einerseits der nachfolgende Wagen in die Endposition verlagert wird und dass andererseits der fertige Wagen 9 von dem nachfolgenden Wagen abgekoppelt werden kann.

Eine Verlagerung des Wagens 9 in der Stapelzelle 1 von einer Startposition zu einer Endposition kann prinzipiell schon direkt nach der Abnahme aller Paletten 13 durch die Hubvorrichtung 23 erfolgen. Der Zeitpunkt der Verlagerung eines Wagens 9 mittels der Einzugseinrichtung hängt im Wesentlichen von der Ausgestaltung des Wagens 9, insbesondere von der Ausgestaltung des Griffs 17 ab. Handelt es sich um einen relativ niedrigen Griff 17, ist eine Verlagerung auch schon vor der Zuführung der letzten in der Hubvorrichtung 23 befindlichen Palette 13 zu dem Übergabebereich 29 möglich. Der Zeitpunkt für die Verlagerung des Wagens 9 von der Startposition in die Endposition innerhalb der Stapelzelle 1 hängt auch davon ab, ob weitere Wagen mit dem Wagen 9 gekoppelt sind.

Falls mit dem Wagen 9 mehrere Paletten 13 aufweisende Wagen 9 über eine Kopplungseinrichtung 19 gekoppelt sind, wird bei einer Verlagerung des Wagens 9 in der Stapelzelle 1 von einer Startposition in eine Endposition automatisch der nächste Wagen in die Stapelzelle 1 hinein an die Startposition nahe des Eingangsbereichs 7 verlagert. Der Einzug der Wagen kann vollständig automatisiert ablaufen. Auch die Betätigung der Hubvorrichtung 23 und der Aufnahmevorrichtung 41 sowie die Betätigung der Zentriereinrichtung 31 und die Beförderungseinrichtung 36 kann vollständig automatisiert erfolgen, sodass für die vorliegende Stapelzelle 1 keinerlei Bedienpersonal benötigt wird.

Sobald die letzte Palette 13 eines Wagens 9 so weit in dem Übergabebereich 29 mittels der Beförderungseinrichtung 36 verlagert wurde, dass die erste Palette 13 des nachfolgenden Wagens 9 dem Übergabebereich 29 zugeführt werden kann, wiederholt sich der anfangs beschriebene Ablauf. Die Hubvorrichtung 23 wird also vorzugsweise alle Paletten 13 des nachfolgenden Wagens 9, der sich jetzt an der in Figur 1 gezeigten Startposition befindet, von dem Wagen 9 entkoppeln und die erste Palette 13 dem Übergabebereich 29 zuführen. Wie bei dem Aufeinanderfolgen zweier Paletten 13 desselben Wagens 9 wird nun nach der letzten Palette 13' eines ersten Wagens 9 die erste Palette 13 des nachfolgenden Wagens dem Übergabebereich 29 zugeführt, sodass auch bei einem Wagenwechsel keinerlei Taktzeitverzögerung entsteht.

Wenn die Aufnahmevorrichtung 41 alle Paletten 13, die ursprünglich auf einem Wagen 9 gelagert waren, zwischenlagert, führt sie die Paletten 13 dem ursprünglichen Wagen 9 zu, der sich nun in der Endposition in dem Bereich der Aufnahmevorrichtung 41 befindet. Im Anschluss daran wird der Wagen 9 vorzugsweise automatisch von möglichen folgenden Wagen 9 entkoppelt und über die Einzugseinrichtung aus der Stapelzelle 1 über den Ausgangsbereich 11 hinaus befördert.

Die Aufnahmevorrichtung 41 ist nun wieder bereit, Paletten 13 mit fertig bearbeiteten Werkstücken 55 des nachfolgenden Wagens 9 zwischenzuspeichern, insbesondere so lange, bis alle Werkstücke 55 aller Paletten 13 fertig bearbeitet wurden und sich in der Aufnahmevorrichtung 41 befinden. Mittels der Einzugsvorrichtung kann der Wagen 9 dann innerhalb der Stapelzelle 1 wieder in Richtung des Ausgangsbereichs 11 verlagert werden, sodass die Aufnahmevorrichtung 41 wiederum alle Paletten 13 auf dem Wagen 9 ablegt und über die Kopplungseinrichtung 19 automatisch ein nachfolgender Wagen 9 mit zu bearbeitenden Werkstücken 55 aufweisende Paletten 13 in die in Figur 1 gezeigte Startposition nahe des Eingangsbereichs 7 verlagert.

Es zeigt sich also, dass mittels der hier vorgeschlagenen vorteilhaften Stapelzelle 1 beliebig viele Wagen 9 mit zu bearbeitenden Werkstücken 55 aufweisende Paletten 13 durch die Stapelzelle 1, insbesondere vollautomatisch, mittels der Einzugsvorrichtung geführt werden können. Das vorteilhafte Abnehmen aller auf dem Wagen 9 befindlichen Paletten 13 mittels der Hubvorrichtung 23 und die Zwischenlagerung der Paletten 13 mittels der Aufnahmevorrichtung 41 bewirken eine Entkopplung der Paletten 13 von dem Wagen 9, sodass der Wagen 9 an die Endposition in der Stapelzelle 1, nämlich in den Bereich der Aufnahmevorrichtung 41 verlagert werden kann und dort die mit fertig bearbeiteten Werkstücken beladenen Paletten 13 dem Wagen 9 zugeführt werden können.

Nach dem Zuführen der Paletten 13 zu dem Übergabebereich 29 werden die Paletten 13 nach dem Prinzip first in first out, also in umgekehrter Reihenfolge von der Aufnahmevorrichtung 41 zwischengelagert und anschließend dem Wagen 9 zugeführt, sodass also die im Eingangsbereich 7 erste Palette 13 im Ausgangsbereich 11 der Stapelzelle 1 nun an unterster Stelle auf dem Wagen 9 gelagert wird. Die in Figur 3 gezeigte unterste Palette 13' hingegen ist nun die oberste Palette des Palettenstapels.

Die oben ausgeführten Erläuterungen machen deutlich, dass die vorliegende Erfindung gewährleistet, dass alle Werkstücke 55 und alle Paletten 13 eines Wagens 9 nach der Bearbeitung wieder auf ihren ursprünglichen Wagen 9 gelagert sind, ohne dass es zu Taktzeitverzögerungen kommt. Somit werden Logistikfehler während der Werkstückbearbeitung ausgeschlossen. Außerdem ist es auf diese Weise möglich, einem Wagen 9 und damit exakt einer Charge an Werkstücken 55 Begleitpapiere zuzuordnen. Auch bewirkt die vorliegende Erfindung einen reibungslosen Übergang zwischen zwei aufeinanderfolgenden mit Werkstücken 55 und Paletten 13 beladenen Wagen 9, die beispielsweise einer Werkstückbearbeitungsmaschine Werkstücke zuführen sollen. Während bei herkömmlichen Stapelzellen Wagen umständlich ausgetauscht werden müssen und somit die Taktzeiten sehr lang werden, gewährleistet die vorliegende Erfindung konstante Taktzeiten auch bei einem Wechsel der Charge, auf die ein Werkstückgreifer in dem Übergabebereich 29 zugreift. Die Dauer eines Takts wird bei der vorliegenden Stapelzelle 1 zu jedem Zeitpunkt durch die Zeitdauer eines Werkstückwechsels bestimmt.

Die Bereitstellung von Werkstücken 55 in einem Übergabebereich 29 erfolgt somit insbesondere dann völlig zuverlässig und ohne Verzögerungen, wenn sich in dem Übergabebereich 29 Paletten zweier unterschiedlicher Wagen 9 und damit Werkstücke 55 unterschiedlicher Chargen befinden. Auf diese Weise können beliebig viele Wagen 9 durch die Stapelzelle 1 mittels der Einzugsvorrichtung hindurchgeführt werden, wobei gewährleistet ist, dass alle Paletten 13 eines Wagens 9 wieder auf ihren ursprünglichen Wagen 9 abgelegt werden und der Übergang zwischen der letzten Palette 13 eines Wagens 9 und der ersten Palette 13 eines nachfolgenden Wagens 9 ohne jede Taktverzögerung abläuft.

Durch den flexiblen Hubrahmen 5 ist ferner gewährleistet, dass die Stapelzelle 1 Paletten 13 unterschiedlicher Größen, wie beispielsweise 300 x 300 mm oder 500 x 600 mm aufnehmen kann. Durch die Zentriereinrichtung 31 wird ferner eine exakte Positionierung der Paletten 13 und damit der Werkstücke 55 in dem Übergabebereich 29 gewährleistet, sodass ein Werkstückgreifer ein zu bearbeitendes Werkstück 55 sicher greifen und ablegen kann.

Wesentlich bei der vorliegenden Erfindung ist auch, dass die exakte Positionierung der Paletten 13 erst in dem Übergabebereich 29 durch die Zentriereinrichtung 31 erfolgt. Somit muss weder eine exakte Positionierung des Wagens 9 in der Stapelzelle 1, noch eine exakte Positionierung der Paletten 13 auf dem Wagen 9 vorliegen. Wesentlich ist lediglich, dass die Hubvorrichtung 23 die Paletten 13 nacheinander dem Übergabebereich 29 zuführen kann und die Paletten 13 in dem Übergabebereich 29 exakt positioniert sind.

Die hier vorgeschlagenen Mechanismen zur Realisierung einer Hubvorrichtung 23, einer Beförderungseinrichtung 36 und einer Aufnahmevorrichtung 41 sind rein beispielhaft und können auf verschiedene Art und Weise realisiert werden.

Entscheidend für das hier vorgeschlagene Verfahren ist zunächst das Abnehmen aller auf dem Wagen 9 befindlichen Paletten 13 insbesondere mittels der Hubvorrichtung 23, woran sich das Zuführen der Paletten 13 zu dem Übergabebereich 29, vorzugsweise zur Bearbeitung der Werkstücke 55 in einer Werkstückbearbeitungsmaschine anschließt. Auch das Zuführen der Paletten 13 wird vorzugsweise mittels der Hubvorrichtung 23 bewirkt und andererseits über die Zentriereinrichtung 31, welche die Paletten 13 auf den Rollen 35 in dem Übergabebereich 29 lagert. Nachdem alle Werkstücke 55 fertig bearbeitet auf die ursprüngliche Palette 13 beispielsweise mittels eines Werkstückgreifers zurückgelegt wurden, kann diese beispielsweise mittels der hier vorgeschlagenen Aufnahmevorrichtung 41 zwischengelagert werden.

Insbesondere ist vorgesehen, dass die Paletten 13 aus dem Übergabebereich 29 einzeln, also nacheinander, insbesondere von der hier vorgeschlagenen Aufnahmevorrichtung 41 aufgenommen werden. Sobald die Aufnahmevorrichtung 41 alle Paletten 13 zwischenlagert, können diese auf den ursprünglichen Wagen 9, der zwischen den oben beschriebenen Schritten an eine andere Position und zwar an die Endposition in den Bereich der Aufnahmevorrichtung 41 verlagert wurde, zugeführt werden.

Die vorliegende Erfindung offenbart eine vorteilhafte Vorrichtung zur Durchführung des vorgeschlagenen Verfahrens, welches ein besonders vorteilhaftes Bereitstellen von zu bearbeitenden Werkstücken 55, die auf Paletten 13 gelagert sind, beispielsweise einer Werkstückbearbeitungsmaschine darstellt. Es zeigt sich, dass die vorliegende Erfindung in vorteilhafter Weise bewirkt, dass sich keine Taktzeitverzögerungen ergeben, weder bei der Zuführung von zwei hintereinander folgenden Paletten 13 in einen Übergabebereich 29, noch beim Zuführen von Paletten 13 eines nachfolgenden Wagens 9. Zudem kann eine hundertprozentige Chargenverfolgung eines Wagens 9 gewährleistet werden, sodass keinerlei Logistikfehler auftreten.

Die hier vorgeschlagene Stapelzelle 1 ist so ausgelegt, dass maximal zwei Wagen 9 in der Stapelzelle 1 angeordnet sein können. Insbesondere kann auch vorgesehen sein, den Übergabebereich 29 wesentlich länger zu gestalten, sodass es also denkbar ist, dass mehr als zwei Paletten 13 zu einem Zeitpunkt in dem Übergabebereich 29 anordenbar sind. Auch kann vorgesehen sein, Paletten 13 über mehrere Bearbeitungsstationen, beispielsweise über mehrere mit Rollen versehene Grundrahmen 3 zu befördern und erst nach dem Zuführen der Paletten 13 zu mehreren Bearbeitungsstationen, diese in einer Aufnahmevorrichtung 41 zwischen zu lagern und dem ursprünglichen Wagen 9 zuzuführen.

Besonders vorteilhaft ist eine mehrspurige Stapelzelle, die mehr als eine Startposition und entsprechend mehr als eine Endposition aufweist, bei der also quasi mehre Wagen insbesondere parallel nebeneinander in die Stapelzelle 1 eingezogen werden können und diese simultan oder auch zeitlich versetzt durch eine entsprechend angepasste Hubvorrichtung 23 beziehungsweise durch einen entsprechend angepassten Hubrahmen 5 von dem Wagen 9 entkoppelt werden. Beispielsweise kann eine Spur in der Stapelzelle 1 dann zur Pufferung von Paletten 13 dienen.

Es kann auch vorgesehen sein, dass die beiden Spuren gegenläufig sind, sodass die Start- und Endpositionen wenigstens zweier paralleler beziehungsweise nebeneinander liegender Spuren in der Stapelzelle 1 also nicht nebeneinander, sondern diagonal gegenüber liegen. Die Abfertigung der Wagen 9 findet dann in entgegengesetzten Richtungen statt.

Anstatt der Paletten 13 können als Aufnahmeeinheiten im Übrigen Drahtkörbe vorgesehen sein, die auf dem Wagen 9 gelagert sind und die zur Aufnahme der Werkstücke dienen.

## Patentansprüche

1. Stapelzelle (1) zur Aufnahme wenigstens eines Wagens (9), auf dem eine Anzahl an Aufnahmeeinheiten, imbesondere Paletten (13) anordenbar sind, und zum Bereitstellen von auf den Aufnahmeeinheiten (13) gelagerten Werkstücken (55) in einem Übergabebereich (29), insbesondere zur Bearbeitung in einer Werkstückbearbeitungsmaschine, umfassend eine Hubvorrichtung (23) zum Abnehmen aller Aufnahmeeinheiten (13) von dem wenigstens einen Wagen (9), eine Beförderungseinrichtung (36) zum Verlagern wenigstens einer Aufnahmeeinheit (13) in dem Übergabebereich (29) und eine Aufnahmevorrichtung (41) zur Aufnahme aller Aufnahmeeinheiten (13) und zum Zuführen dieser an den wenigstens einen Wagen (9), **dadurch gekennzeichnet, dass** wenigstens zwei Aufnahmeeinheiten (13",13) gleichzeitig in dem Übergabebereich (29) anordenbar und dort mittels der Beförderungseinrichtung (36) gleichzeitig verlagerbar sind.

2. Stapelzelle nach Anspruch 1, **dadurch gekennzeichnet, dass** eine Zentriereinrichtung (31) zum Ausrichten der Aufnahmeeinheiten (13) vorgesehen ist.

3. Stapelzelle nach Anspruch 1 oder 2, **dadurch gekennzeichnet, dass** eine Einzugseinrichtung zur Verlagerung des wenigstens einen Wagens (9) in der Stapelzelle (1) vorgesehen ist.

4. Stapelzelle nach einem der vorhergehenden Ansprüche, **dadurch gekennzeichnet, dass** sie einen Eingangsbereich (7) zur Aufnahme wenigstens eines Wagens (9) und einen Ausgangsbereich (11) zur Abgabe wenigstens eines Wagens (9) aufweist.

5. Stapelzelle nach einem der vorhergehenden Ansprüche, **dadurch gekennzeichnet, dass** sie einen Grundrahmen (3) und einen Hubrahmen (5) aufweist.

6. Stapelzelle nach Anspruch 5, **dadurch gekennzeichnet, dass** der Hubrahmen (5) die Hubvorrichtung (23) umfasst.

7. Stapelzelle nach einem der vorhergehenden Ansprüche 5 oder 6, **dadurch gekennzeichnet, dass** der Hubrahmen (5) die Aufnahmevorrichtung (41) umfasst.

8. Stapelzelle nach einem der Ansprüche 5 bis 7, **dadurch gekennzeichnet, dass** der Hubrahmen (5) die Zentriereinrichtung (31) umfasst.

9. Stapelzelle nach einem der vorhergehenden Ansprüche 5 bis 8, **dadurch gekennzeichnet, dass** der Hubrahmen (5) zwei Hubrahmenhälften (5a,5b) aufweist, deren Abstand zueinander vorzugsweise veränderbar ist.

10. Stapelzelle nach einem der vorhergehenden Ansprüche 5 bis 9, **dadurch gekennzeichnet, dass** der Grundrahmen (3) die Einzugseinrichtung umfasst.

11. Stapelzelle nach einem der vorhergehenden Ansprüche, **dadurch gekennzeichnet, dass** die Beförderungseinrichtung (36) einen Zahnriemenantrieb aufweist.

12. Stapelzelle nach einem der vorhergehenden Ansprüche, **dadurch gekennzeichnet, dass** jeweils die letzte Aufnahmeeinheit (13') eines Wagens (9) zusammen mit der ersten Aufnahmeeinheit (13) eines nachfolgenden Wagens (9) in dem Übergabebereich (29) angeordnet ist.

13. Verfahren zum Bereitstellen von auf Aufnahmeeinheiten (13) aufgebrachten Werkstücken (55), die auf einem Wagen (9) anordenbar sind, **gekennzeichnet durch** die folgenden Schritte:
- Abnehmen aller auf dem Wagen (9) befindlichen Aufnahmeeinheiten (13)
- Zuführen der Aufnahmeeinheiten (13) zu einem Übergabebereich (29), vorzugsweise zur Bearbeitung der Werkstücke (55) in einer Werkstückbearbeitungsmaschine, wobei sich zeitweise wenigstens zwei Aufnahmeeinheiten (13) gleichzeitig in dem Übergabebereich (29) befinden, die dort mittels derselben Beförderungseinrichtung auch gleichzeitig verlagert werden;
- Zwischenlagern der Aufnahmeeinheiten (13) und
- Zuführen aller Aufnahmeeinheiten (13) zu demselben Wagen (9).

14. Verfahren nach Anspruch 13, **dadurch gekennzeichnet, dass** jeweils die letzte Aufnahmeeinheiten (13) des Wagens (9) und die erste Aufnahmeeinheiten (13) eines nachfolgenden Wagens dem Übergabebereich (29) zugeführt werden.

15. Verfahren nach einem der Ansprüche 13 und 14, **dadurch gekennzeichnet, dass** die Aufnahmeeinheiten (13) aus dem Übergabebereich (29) nacheinander zur Zwischenlagerung aufgenommen werden.

16. Verfahren nach einem der Ansprüche 13 und 14, **dadurch gekennzeichnet, dass** der Wagen (9) während dem Abnehmen aller Aufnahmeeinheiten (13) und dem Zwischenlagern aller Aufnahmeeinheiten (13) von einer Startposition in eine Endposition verlagert wird.

17. Verfahren nach einem der Ansprüche 13 und 14, **dadurch gekennzeichnet, dass** es ohne Taktzeitverzögerung ausführbar ist.

18. Verfahren nach einem der Ansprüche 13 bis 16, **dadurch gekennzeichnet, dass** der Zahnriemen der Beförderungseinrichtung (23) zumindest teilweise von der Aufnahmeeinheit (13) entkoppelt werden kann.

## Claims

1. A stacking cell (1) for receiving at least one cart (9) on which a number of receiving units, more particularly pallets (13), can be arranged, and for providing workpieces (55), which are stored on the receiving units (13), in a transfer region (29), more particularly for being machined in a workpiece machining machine, comprising a lifting apparatus (23) for removing all receiving units (13) from the at least one cart (9), a conveying assembly (36) for shifting at least one receiving unit (13) in the transfer region (29) and a receiving apparatus (41) for receiving all receiving units (13) and for supplying these to the at least one cart (9), **characterized in that** at least two receiving units (13", 13) can be arranged in the transfer region (29) at the same time and can be shifted there at the same time by means of the conveying assembly (36).

2. The stacking cell according to claim 1, **characterized in that** a centering assembly (31) is provided for aligning the receiving units (13).

3. The stacking cell according to claim 1 or 2, **characterized in that** a feeding assembly is provided for shifting the at least one cart (9) in the stacking cell (1).

4. The stacking cell according to any one of the preceding claims, **characterized in that** it comprises an input region (7) for receiving at least one cart (9) and an output region (11) for releasing at least one cart (9).

5. The stacking cell according to any one of the preceding claims, **characterized in that** it comprises a basic frame (3) and a lifting frame (5).

6. The stacking cell according to claim 5, **characterized in that** the lifting frame (5) comprises the lifting apparatus (23).

7. The stacking cell according to any one of the preceding claims 5 or 6, **characterized in that** the lifting frame (5) comprises the receiving apparatus (41).

8. The stacking cell according to any one of claims 5 to 7, **characterized in that** the lifting frame (5) comprises the centering assembly (31).

9. The stacking cell according to any one of the preceding claims 5 to 8, **characterized in that** the lifting frame (5) comprises two lifting frame halves (5a, 5b) wherein the distance of said lifting frame halves (5a, 5b) from each other can, preferably, be changed.

10. The stacking cell according to any one of the preceding claims 5 to 9, **characterized in that** the basic frame (3) comprises the feeding assembly.

11. The stacking cell according to any one of the preceding claims, **characterized in that** the conveying assembly (36) comprises a toothed belt drive.

12. The stacking cell according to any one of the preceding claims, **characterized in that** the last receiving unit (13') of a cart (9) is each arranged in the transfer region (29) together with the first receiving unit (13) of a subsequent cart (9).

13. A method for providing workpieces (55) which are supplied on receiving units (13) and can be arranged on a cart (9), **characterized by** the following steps:
- removing all receiving units (13) present on the cart (9);
- supplying the receiving units (13) to a transfer region (29), preferably for machining the workpieces (55) in a workpiece machining machine, wherein at least two receiving units (13) are temporarily present in the transfer region (29) at the same time, said receiving units (13) being shifted there also at the same time by means of the same conveying assembly;
- intermediately storing the receiving units (13); and
- supplying all receiving units (13) to the same cart (9).

14. The method according to claim 13, **characterized in that** the last receiving unit (13) of the cart (9) and the first receiving unit (13) of a subsequent cart are supplied to the transfer region (29).

15. The method according to any one of claims 13 and 14, **characterized in that** the receiving units (13) are received from the transfer region (29) one after the other for being intermediately stored.

16. The method according to any one of claims 13 and 14, **characterized in that** the cart (9) is shifted from a start position to an end position while all receiving units (13) are removed and all receiving units (13) are intermediately stored.

17. The method according to any one of claims 13 and 14, **characterized in that** it can be applied without any cycle time delay.

18. The method according to any one of claims 13 to 16, **characterized in that** the toothed belt of the conveying assembly (23) can, at least in part, be decoupled from the receiving unit (13).

## Revendications

1. Cellule d'empilement (1) pour recevoir au moins un chariot (9), sur lequel un certain nombre d'unités de réception des palettes (13), peuvent être disposées, et pour préparer des pièces à usiner (55) logées sur les unités de réception (13) dans une zone de transfert (29), notamment pour l'usinage dans une machine à usiner des pièces à usiner, comprenant un dispositif de levage (23) pour prélever toutes les unités de réception (13) de l'au moins un chariot (9), un dispositif de transport (36) pour déplacer au moins une unité de réception (13) dans la zone de transfert (29) et un dispositif de réception (41) pour recevoir toutes les unités de réception (13) et pour les acheminer à l'au moins un chariot (9), **caractérisée en ce qu'**au moins deux unités de réception (13", 13) peuvent être disposées simultanément dans la zone de transfert (29) et peuvent y être déplacées simultanément au moyen du dispositif de transport (36).

2. Cellule d'empilement selon la revendication 1, **caractérisée en ce qu'**un dispositif de centrage (31) est prévu pour orienter les unités de réception (13).

3. Cellule d'empilement selon la revendication 1 ou 2, **caractérisée en ce qu'**un dispositif de retrait est prévu pour déplacer l'au moins un chariot (9) dans la cellule d'empilement (1).

4. Cellule d'empilement selon l'une quelconque des revendications précédentes, **caractérisée en ce qu'**elle présente une zone d'entrée (7) pour recevoir au moins un chariot (9) et une zone de sortie (11) pour délivrer au moins un chariot (9).

5. Cellule d'empilement selon l'une quelconque des revendications précédentes, **caractérisée en ce qu'**elle présente un châssis de base (3) et un châssis de levage (5).

6. Cellule d'empilement selon la revendication 5, **caractérisée en ce que** le châssis de levage (5) comprend le dispositif de levage (23).

7. Cellule d'empilement selon l'une quelconque des revendications précédentes 5 ou 6, **caractérisée en ce que** le châssis de levage (5) comprend le dispositif de réception (41).

8. Cellule d'empilement selon l'une quelconque des revendications 5 à 7, **caractérisée en ce que** le châssis de levage (5) comprend le dispositif de centrage (31).

9. Cellule d'empilement selon l'une quelconque des revendications précédentes 5 à 8, **caractérisée en ce que** le châssis de levage (5) présente deux moitiés de châssis de levage (5a, 5b) dont l'écart entre elles est de préférence variable.

10. Cellule d'empilement selon l'une quelconque des revendications précédentes 5 à 9, **caractérisée en ce que** le châssis de base (3) comprend le dispositif de retrait.

11. Cellule d'empilement selon l'une quelconque des revendications précédentes, **caractérisée en ce que** le dispositif de transport (36) présente une transmission à courroie dentée.

12. Cellule d'empilement selon l'une quelconque des revendications précédentes, **caractérisée en ce que** la dernière unité de réception (13') d'un chariot (9) est à chaque fois disposée avec la première unité de réception (13) d'un chariot suivant (9) dans la zone de transfert (29).

13. Procédé pour préparer des pièces à usiner (55) logées sur des unités de réception (13) qui peuvent être disposées sur un chariot (9), **caractérisé par** les étapes suivantes :
- prélèvement de toutes les unités de réception (13) se trouvant sur le chariot (9) ;
- acheminement des unités de réception (13) vers une zone de transfert (29), de préférence pour usiner les pièces à usiner (55) dans une machine à usiner des pièces à usiner, dans lequel au moins deux unités de réception (13) se trouvent temporairement simultanément dans la zone de transfert (29), lesquelles y sont également déplacées simultanément au moyen du même dispositif de transport ;
- entreposage des unités de réception (13) et
- acheminement de toutes les unités de réception (13) vers le même chariot (9).

14. Procédé selon la revendication 13, **caractérisé en ce que** la dernière unité de réception (13) du chariot (9) et la première unité de réception (13) d'un chariot suivant sont à chaque fois acheminées à la zone de transfert (29).

15. Procédé selon l'une quelconque des revendications 13 et 14, **caractérisé en ce que** les unités de réception (13) sont reçues de la zone de transfert (29) successivement pour l'entreposage.

16. Procédé selon l'une quelconque des revendications 13 et 14, **caractérisé en ce que** le chariot (9) est déplacé d'une position de démarrage dans une position finale pendant le prélèvement de toutes les unités de réception (13) et l'entreposage de toutes les unités de réception (13).

17. Procédé selon l'une quelconque des revendications 13 et 14, **caractérisé en ce qu'**il peut être exécuté sans retardement de durée du cycle.

18. Procédé selon l'une quelconque des revendications 13 à 16, **caractérisé en ce que** la courroie dentée du dispositif de transport (23) peut être au moins partiellement désaccouplée de l'unité de réception (13).
